# EUROPÄISCHE PATENTSCHRIFT

(11) **EP 0 894 480 B1**
(45) Veröffentlichungstag und Bekanntmachung des Hinweises auf die Patenterteilung: **07.12.2005**
(21) Anmeldenummer: 97810540.1
(22) Anmeldetag: 29.07.1997
(51) Int. Cl.: A61C 13/265

(54) **Verankerung für die Dentalprothetik**
Anchor for dental prosthetics
Ancrage pour prothèses dentaires

(43) Veröffentlichungstag der Anmeldung: 03.02.1999
(73) Patentinhaber: CENDRES ET METAUX S.A., CH-2501 Bienne (CH)
(72) Erfinder: Blümli, Markus, 2501 Bienne (CH); Buchholz, Alexis, 2501 Bienne (CH); Guenat, Jean-Marc, 2501 Bienne (CH)
(74) Vertreter: AMMANN PATENTANWÄLTE AG BERN

(56) Entgegenhaltungen:
- EP-A- 0 387 428
- EP-A- 0 513 576
- EP-A- 0 583 746
- DE-A- 2 129 910
- DE-A- 3 406 448

## Beschreibung

Die vorliegende Erfindung bezieht sich auf eine Verankerung für die Dentalprothetik gemäss dem Oberbegriff von Patentanspruch 1.

Derartige Verankerungen werden vom Anmelder unter dem Namen "Verankerung nach Professor A. Gerber" vertrieben. Diese Verankerungen sind nach dem Druckknopf-Prinzip ausgebildet und enthalten in der Matrize eine Stahlfeder, die in die Nut am Retentionsteil der Patrize fasst, um so die Matrize festzuhalten. Die Verwendung einer Stahlfeder hat verschiedene Nachteile, sowohl aus hygienischen und herstellungsbedingten Gründen als auch weil damit die Retention der Matrize an der Patrize und somit der Prothese nicht verändert und eingestellt werden kann.

Eine Steckverbindung mit Merkmalen vom Oberbegriff von Patentanspruch 1 ist aus der EP-A-0 387 428 bekannt, wobei, ausgehend von Verankerungen mit nur einem Klemmring, die mit diesem Ring durchzuführende Funktionen aufgeteilt werden in einen Klemmring und einen relativ weichen Lagerungsring.

Die nicht vorveröffentlichte WO-A-98 52490 offenbart eine Vorrichtung zur Bildung eines Zahnersatzes, wobei ein Abformelement mit Rastmittel mit Nase in eine Nut eingreift und sich mit einer Wand auf eine Schulter abstützt.

Die ebenfalls nicht vorveröffentlichte EP-A-0 867 154 des gleichen Anmelders offenbart ein Verankerungselement gemäss Oberbegriff von Patentanspruch 1.

Allen vorbekannten Verankerungselementen dieser Gattung ist gemeinsam, dass die Retentionskraft fixiert ist und es ist von diesem Stand der Technik ausgehend Aufgabe der vorliegenden Erfindung eine Verankerung zu schaffen, die neben einem geringeren Herstellungsaufwand und eine hygienischere Verwendung eine veränderbare Einstellung der Retentionskraft gestattet. Diese Aufgabe wird mit der Verankerung gemäss Patentanspruch 1 gelöst.

Weitere Vorteile und Ausbildungen sind in den abhängigen Ansprüchen angegeben.

Die Erfindung wird im folgenden anhand einer Zeichnung eines Ausführungsbeispiels näher erläutert.
- Figur 1: zeigt im Längsschnitt die erfindungsgemässe Matrize,
- Figur 2: zeigt in Ansicht die Patrize, und
- Figur 3: zeigt in perspektivischer Sicht den in Figur 1 eingesetzten Kunststoff-Einsatz.

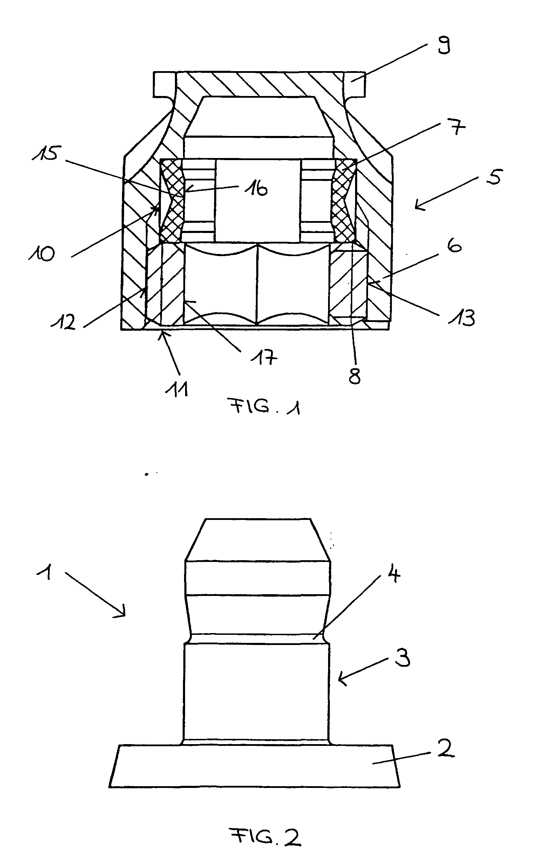

In Figur 2 erkennt man die Patrize 1, die einen Sockel 2 zum Angiessen oder Anlöten an eine Wurzelkappe und einen Retentionsstift 3 mit der umlaufenden Retentionsnut 4 aufweist. Die Patrize kann im Prinzip aus einer beliebigen für die Dentaltechnik verwendbaren Legierung hergestellt werden, vorzugsweise jedoch aus einer palladium- und kupferfreien, angussfähigen Legierung.

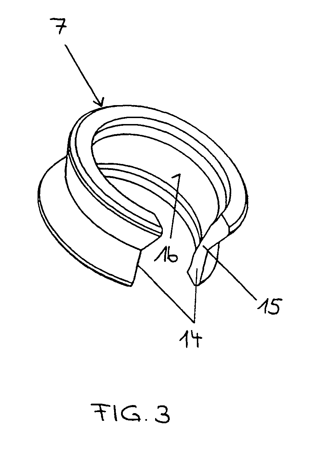

Die in Figur 1 dargestellte Matrize 5 besteht im wesentlichen aus einem als geschlossene Kappe ausgebildeten Gehäuse 6, einem Kunststoffeinsatz 7, siehe auch Figur 3, und einem Einstellring 8. Das Gehäuse der Matrize kann ebenfalls aus einer bekannten Dentallegierung hergestellt sein, vorzugsweise wird jedoch Reintitan dazu verwendet. Zum besseren Einpolymerisieren oder Einkleben weist das Gehäuse prothesenseitig mehrere Sicherungsflansche 9 auf, die vor allem der Verdrehsicherung des aufzunehmenden Prothesenteils dienen.

Etwa in der Mitte weist das Matrizengehäuse in seinem Innern eine Ringnut 10 auf, um den Kunststoffeinsatz 7 aufzunehmen. Die Matrize 5 weist an ihrem offenen Ende 11 ein Innengewinde 12 auf, das der Aufnahme des Einstellrings 8 dient, der ein Aussengewinde 13 aufweist. Die Gewinde 12 und 13 sind auf an sich bekannte Weise als selbsthemmende Gewinde ausgebildet, um eine Lockerung und ein Herausdrehen des Einstellringes zu verhindern. Der Einstellring 8 ist ebenfalls aus Reintitan gefertigt, kann aber auch aus einer anderen geeigneten Dentallegierung angefertigt sein.

Der Kunststoff-Einsatz 7 gemäss Figur 3 ist aus einem geeigneten, dauerhaften Kunststoff gefertigt, der über Jahre hinaus einen sicheren frikativen oder retentiven Halt der Prothese auf dem Restzahnbestand gewährleistet. Wie aus Figur 3 ersichtlich ist, ist der Kunststoff-Einsatz ringförmig ausgebildet und besitzt einen Schlitz 14, wodurch einerseits sein Einsetzen erleichtert wird und andererseits ein Zusammenpressen mittels dem Einstellring 8 gewährleistet wird, ohne dass sich der Ring verzieht. Der Kunststoff-Einsatz 7 hat einen V-förmigen Querschnitt, wobei die Basis innen als Retentionswulst 15 ausgebildet ist, der in die Retentionsnut 4 der Patrize greift. In vorliegendem Beispiel ist die Vorderfläche 16 des Retentionswulstes eben ausgebildet und weist beidseitig eine Kante auf, wodurch gewährleistet wird, dass die Matrize auf der Patrize kein Spiel aufweist, sondern satt gehalten wird.

Der Einstellring 8 weist ferner einen Innensechskant 17 auf, um mittels einem Imbusschlüssel sein Verdrehen zu ermöglichen. Durch das Verdrehen des Einstellringes kann der Kunststoffeinsatz mehr oder weniger zusammengepresst werden, so dass sich der Innendurchmesser des Retentionswulstes verändert und somit die Retentionskraft zwischen der Matrize und der Patrize beeinflusst wird. Dadurch ist die Möglichkeit gegeben, bei einer solchen Verankerung von der frikativen Zurückhaltung der Matrize bzw. Prothese zu einer retentiven überzugehen, je nach Wunsch. Ausserdem ermöglicht diese Feinjustierung der Retentionskraft ohne grossen Aufwand eine Anpassung des Haltes der Prothese auf die sich ändernden Mundverhältnisse.

## Patentansprüche

1. Verankerung für die Dental-Prothetik, mit einer an einem Zahn befestigbaren Patrize (1) mit einem zylindrischen Retentionsstift (3) und einer mit der Zahnprothese verbindbaren und an der Patrize abnehmbar befestigbaren Matrize (5), wobei der Retentionsstift (3) der Patrize mit einer Retentionsnut (4) und das Innere der Matrize mit einem in die Retentionsnut greifenden Retentionsteil versehen sind und das Retentionsteil in der Matrize ein Kunststoffeinsatz (7) ist, **dadurch gekennzeichnet, dass** die Matrize (5) einen auf den Kunststoffeinsatz (7) wirkenden, verstellbaren Einstellring (8) aufweist, um die Retentionskraft einzustellen.

2. Verankerung nach Anspruch 1, **dadurch gekennzeichnet, dass** der Kunststoffeinsatz (7) geschlitzt ist.

3. Verankerung nach einem der Ansprüche 1 oder 2, **dadurch gekennzeichnet, dass** der Kunststoffeinsatz (7) innen einen Retentionswulst (15) mit einer ebenen Fläche (16) aufweist.

4. Verankerung nach einem der Ansprüche 1 bis 3, **dadurch gekennzeichnet, dass** der Einstellring (8) ein Aussengewinde (12) und das offene Ende des als geschlossene Kappe ausgebildeten Matrizengehäuses (6) ein entsprechendes Innengewinde (13) aufweisen, wobei die beiden Gewinde (12, 13) selbsthemmend ausgebildet sind.

5. Verankerung nach Anspruch 4, **dadurch gekennzeichnet, dass** das Matrizengehäuse (6) am geschlossenen Ende mindestens einen Sicherungsflansch (9) aufweist.

6. Verankerung nach Anspruch 4 oder 5, **dadurch gekennzeichnet, dass** das Matrizengehäuse (6) und der Einstellring (8) aus Reintitan gefertigt sind.

7. Verwendung der Verankerung nach Anspruch 1 für eine Dental-Prothese, **dadurch gekennzeichnet, dass** durch Drehen des Einstellrings (8) die Retentionskraft der Matrize an der Patrize kontinuierlich von frikativ auf retentiv, und umgekehrt, eingestellt werden kann.

## Claims

1. Anchor for dental prosthetics, including a male part (1) intended to be fastened to a tooth and comprising a retention pin (3), and a female part (5) that is to be connected to a dental prosthesis and is removably attachable to the male part, the retention pin (3) of the male part being provided with a retention groove (4) and the interior of the female part with a retention member that engages in the retention groove, and the retention member in the female part being a plastics insert (7), **characterised in that** the female part (5) comprises an adjustable adjusting ring (8) that acts upon the plastics insert (7) for adjusting the retention force.

2. Anchor according to claim 1, **characterised in that** the plastics insert (7) is slotted.

3. Anchor according to one of claims 1 or 2, **characterised in that** the plastics insert (7) is internally provided with a retention bead (15) having a flat surface (16).

4. Anchor according to one of claims 1 to 3, **characterised in that** the adjusting ring (8) comprises an external thread (12) and the open end of the housing (6) of the female part in the form of a closed cap comprises a corresponding internal thread (13), the two threads (12, 13) being designed as self-locking threads.

5. Anchor according to claim 4, **characterised in that** the housing (6) of the female part comprises at least one securing flange (9) at its closed end.

6. Anchor according to claim 4 or 5, **characterised in that** the housing (6) of the female part and the adjusting ring (8) are made of pure titanium.

7. Use of the anchor according to claim 1 for a dental prosthesis, **characterised in that** the retention force of the female part on the male part is continuously adjustable from frictional to retentive or vice versa by rotation of the adjusting ring (8).

## Revendications

1. Ancrage pour la prothétique dentaire, composé d'une partie mâle (1) attachable à une dent et munie d'une tige de rétention (3) cylindrique et d'une partie femelle (5) pouvant être reliée à une prothèse dentaire et attachable de manière amovible à la partie mâle, la tige de rétention (3) de la partie mâle comprenant une rainure de rétention (4) et l'intérieur de la partie femelle un élément de rétention qui s'engage dans ladite rainure de rétention, et l'élément de rétention dans la partie femelle étant une insertion (7) en matière plastique, **caractérisé en ce que** la partie femelle (5) comporte un anneau de réglage (8) ajustable qui agit sur l'insertion (7) en matière plastique afin de régler la force de rétention.

2. Ancrage selon la revendication 1, **caractérisé en ce que** l'insertion (7) en matière plastique est fendue.

3. Ancrage selon l'une des revendications 1 ou 2, **caractérisé en ce que** l'insertion (7) en matière plastique présente un bourrelet de rétention (15) intérieur avec une surface plate (16).

4. Ancrage selon l'une des revendications 1 à 3, **caractérisé en ce que** l'anneau de réglage (8) présente un filet extérieur (12) et l'extrémité ouverte du boîtier (6) de la partie femelle sous forme d'une calotte fermée présente un filet intérieur (13) correspondant, les deux filets (12, 13) étant autobloquants.

5. Ancrage selon la revendication 4, **caractérisé en ce que** le boîtier (6) de la partie femelle présente au moins un collet de retenue (9) à l'extrémité fermée.

6. Ancrage selon la revendication 4 ou 5, **caractérisé en ce que** le boîtier (6) de la partie femelle et l'anneau de réglage (8) sont fabriqués en titane pur.

7. Utilisation de l'ancrage selon la revendication 1 pour une prothèse dentaire, **caractérisée en ce que** la force de rétention de la partie femelle sur la partie mâle est réglable en continu entre fricative et rétentive et vice-versa par rotation de l'anneau de réglage (8).
